# EUROPEAN PATENT APPLICATION

(11) **EP 4 700 250 A1**
(43) Date of publication of application: **25.02.2026**
(21) Application number: 24918179.3
(22) Date of filing: 06.11.2024
(51) Int. Cl.: F15B 11/16, F15B 13/06, B66F 11/04, B66F 13/00

(54) **ELECTRICALLY-DRIVEN AERIAL WORK PLATFORM AND HYDRAULIC SYSTEM THEREOF**

(30) Priority: 16.01.2024 CN 202410065276
(71) Applicant: Zoomlion Intelligent Access Machinery Co., Ltd., Changsha, Hunan 410010 (CN)
(72) Inventor: REN, Huili, Changsha, Hunan 410010 (CN); ZHONG, Yi, Changsha, Hunan 410010 (CN); GUO, Qiang, Changsha, Hunan 410010 (CN); ZOU, Xushao, Changsha, Hunan 410010 (CN); YANG, Tao, Changsha, Hunan 410010 (CN); XIAO, Chengfeng, Changsha, Hunan 410010 (CN); LONG, Tao, Changsha, Hunan 410010 (CN)
(74) Representative: Petraz, Gilberto Luigi
(86) International application number: PCT/CN2024/130185
(87) International publication number: WO 2025/152570

(57) **Abstract**

The present application relates to the aerial work platform field, disclosing an electric-driven aerial work platform and a hydraulic system thereof. The hydraulic system includes a superstructure hydraulic system and a substructure hydraulic system. The superstructure system includes a luffing cylinder, a telescopic cylinder, and a superstructure hydraulic pump supplying oil to the two cylinders. The substructure system includes a steering cylinder, a floating cylinder assembly, and a substructure hydraulic pump supplying oil to the steering cylinder and the assembly. The superstructure and substructure systems are independent, with the superstructure pump having a greater rated displacement than the substructure pump. This independent and distributed arrangement overcomes the problem in the prior art, where high-pressure oil from the superstructure hydraulic pump must be transported through the central rotary joint, causing significant pressure loss. The system can save energy, increase efficiency, and achieve emission reduction.

## Description

### CROSS-REFERENCE TO RELATED APPLICATIONS

The present application claims the benefit of Chinese Patent Application No. 202410065276.1 filed on January 16, 2024, the entire content of which is incorporated herein by reference.

### TECHNICAL FIELD

The present application relates to aerial work platforms, and specifically to an electric-driven aerial work platform and a hydraulic system thereof.

### BACKGROUND

An electric-driven aerial work platform uses a travel motor to drive the wheels to move. During the traveling process of the whole machine, steering and floating functions need to be used from time to time. In the prior art, the vehicle steering and floating share a hydraulic oil source with the superstructure actions such as luffing, telescoping, and slewing. Therefore, the steering action is supplied with oil by a main pump driven by a pump motor, the direction of an oil circuit is controlled by a directional control valve, and then the oil is transported to a substructure steering cylinder through a central rotary joint. Similarly, the floating action is supplied with oil by the main pump driven by the pump motor, controlled by the floating control valve, and then the oil is transported to the substructure floating cylinder through the central rotary joint. Currently, the hydraulic system of the electric-driven aerial work platform is relatively complex and has high energy consumption. With the increasing energy-saving requirements of electric-driven vehicles, it is increasingly difficult to meet the design requirements for energy consumption.

### SUMMARY

The purpose of the present application is to provide an electric-driven aerial work platform and a hydraulic system thereof to achieve the functions of reducing energy consumption, saving energy, and increasing efficiency.

In order to achieve the above purpose, the present application, in one aspect, provides a hydraulic system of an electric-driven aerial work platform, including:
a superstructure hydraulic system, including a luffing cylinder and a telescopic cylinder to drive a boom, and a superstructure hydraulic pump to supply oil to the luffing cylinder and the telescopic cylinder; and
a substructure hydraulic system, including a steering cylinder to drive a vehicle body to steer, a floating cylinder assembly, and a substructure hydraulic pump to supply oil to the steering cylinder and the floating cylinder assembly;
in which, the superstructure hydraulic system and the substructure hydraulic system are independent of each other, and a rated displacement of the superstructure hydraulic pump is greater than a rated displacement of the substructure hydraulic pump.

Optionally, the substructure hydraulic system includes a steering control hydraulic circuit, and the steering control hydraulic circuit includes:
a steering directional control valve, used for directional control of the steering cylinder and including a first working port and a second working port respectively connected to the large and small chambers of the steering cylinder, in which an inlet port of the steering directional valve is connected to a main oil inlet circuit, and a return port is connected to a main oil return circuit;
a shuttle valve, in which two comparison ports are respectively connected to the first working port and the second working port; and
a compensator, connected between the main oil inlet circuit and the main oil return circuit, in which a control port of the compensator is hydraulically connected to an outlet port of the shuttle valve through a pilot control oil circuit.

Optionally, the compensator is a hydraulically controlled stop valve with continuously adjustable valve port opening, and the control port of the compensator includes a first control end and a second control end at both ends, in which the first control end is a spring end connected to the pilot control oil circuit, and the second control end is hydraulically connected to the main oil inlet circuit.

Optionally, the steering control hydraulic circuit includes:
a one-way valve, arranged in the pilot control oil circuit of the compensator;
in which, the one-way valve is configured to allow hydraulic oil to flow from the outlet port of the shuttle valve to the control port of the compensator and is configured to stop flow in the reverse direction.

Optionally, the steering control hydraulic circuit includes:
a throttle valve, arranged in a connecting oil circuit between the pilot control oil circuit and the main oil return circuit.

Optionally, the steering control hydraulic circuit includes:
a pressure-compensated flow valve, arranged in the main oil inlet circuit adjacent to the inlet port of the steering directional control valve.

Optionally, the substructure hydraulic system includes a floating control hydraulic circuit, and the floating control hydraulic circuit includes:
a floating control valve, used for controlling the floating cylinder assembly, in which an inlet port of the floating control valve is connected to the main oil inlet circuit through a bypass oil inlet circuit;
a pressure reducing valve, arranged in the bypass oil inlet circuit;
in which, the bypass oil inlet circuit forms a first hydraulic connection point on the main oil inlet circuit, and the compensator forms a second hydraulic connection point on the main oil inlet circuit, and the first hydraulic connection point is located at the downstream of the second hydraulic connection point.

Optionally, the substructure hydraulic system includes:
a floating relief valve arranged between the bypass oil inlet circuit and the main oil return circuit between the pressure reducing valve and the floating control valve; and
a main relief valve arranged between the main oil inlet circuit and the main oil return circuit.

Optionally, the substructure hydraulic system includes:
a power unit assembly, including an integrated arrangement of the substructure hydraulic pump, a motor, and a hydraulic oil tank; and
a control valve group, at least including an integrated arrangement of the steering directional control valve, the shuttle valve, the compensator, the floating control valve, and the pressure reducing valve.

Optionally, the substructure hydraulic pump and the superstructure hydraulic pump are both motor-driven hydraulic pumps.

In another aspect, the present application also provides an electric-driven aerial work platform, which includes the hydraulic system of the electric-driven aerial work platform described above.

In the hydraulic system of the electric-driven aerial work platform of the present application, the independent distributed arrangement of the superstructure hydraulic system and the substructure hydraulic system solves the problem in the prior art that the substructure steering cylinder and the floating cylinder require high-pressure pumping oil from the superstructure hydraulic pump to be transported through the central rotary joint, resulting in a large pressure loss. The arrangement can reduce energy consumption, save energy, increase efficiency, and meet the needs of energy conservation and emission reduction.

Other features and advantages of the embodiments of the present application will be described in detail in the subsequent DESCRIPTION OF EMBODIMENTS.

### BRIEF DESCRIPTION OF DRAWINGS

The drawings are used to provide a further understanding of the embodiments of the present application and form part of the specification. They are used to explain the embodiments of the present application together with the following detailed embodiments, but do not constitute a limitation on the embodiments of the present application. For persons of ordinary skill in the art, other drawings can also be obtained based on the structures shown in these drawings without creative efforts. In the drawings:
FIG. 1 is a hydraulic schematic diagram of a part of the hydraulic system of an electric-driven aerial work platform in the prior art;
FIG. 2 is a hydraulic schematic diagram of the substructure hydraulic system in the hydraulic system of the electric-driven aerial work platform according to an embodiment of the present application, in which the hydraulic circuit of the travel motor and so on are omitted; and
FIG. 3 is a hydraulic schematic diagram of the integrated control valve group used in the hydraulic system of FIG. 2.

### Reference numerals

| | | | |
|---|---|---|---|
| 1 | Hydraulic oil tank | 2 | Substructure hydraulic pump |
| 3 | High-pressure filter | 4 | Control valve group |
| 5 | Pressure measuring connector | 6 | Floating cylinder assembly |
| 7 | Steering cylinder | | |
| 41 | Compensator | 42 | Main relief valve |
| 43 | Pressure reducing valve | 44 | Floating relief valve |
| 45 | Floating control valve | 46 | Shuttle valve |
| 47 | Steering directional control valve | 48 | Pressure-compensated flow valve |
| 49 | One-way valve | 410 | Throttle valve |
| L0 | Main oil return circuit | L1 | Main oil inlet circuit |
| L' | Pilot control oil circuit | L1' | Bypass oil inlet circuit |
| A1 | First working port | A2 | Second working port |
| V1 | First hydraulic connection point | V2 | Second hydraulic connection point |

### DESCRIPTION OF EMBODIMENTS

The embodiments of the present application will be described in detail below with reference to the drawings. It should be understood that the embodiments described herein are only to explain the present application, and are not intended to limit the present application.

The electric-driven aerial work platform and the hydraulic system thereof according to the present application are described below with reference to the drawings.

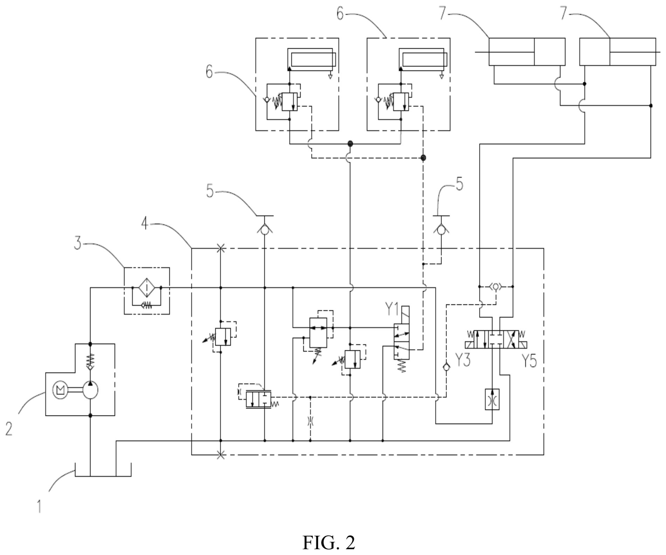

As mentioned above, the hydraulic system of the electric-driven aerial work platform in the prior art is too complex and redundant, resulting in high energy consumption and failing to meet the energy-saving requirements of electric-driven vehicles. Therefore, the present application discloses a new hydraulic system of an electric-driven aerial work platform. As shown in FIG. 2, in a specific embodiment, the new hydraulic system includes:
a superstructure hydraulic system, including a luffing cylinder to drive a boom, a telescopic cylinder, and a superstructure hydraulic pump to supply oil to the luffing cylinder and the telescopic cylinder; and
a substructure hydraulic system, including a steering cylinder 7 to drive a vehicle body to steer, a floating cylinder assembly 6, and a substructure hydraulic pump 2 to supply oil to the steering cylinder 7 and the floating cylinder assembly 6;
in which, the superstructure hydraulic system and the substructure hydraulic system are independent of each other, and a rated displacement of the superstructure hydraulic pump is greater than a rated displacement of the substructure hydraulic pump 2.

In the present application, the substructure hydraulic system is particularly arranged independently from the superstructure hydraulic system. The two do not share an oil source and have no oil pipeline connection. This not only simplifies the pipeline wiring but also greatly reduces the energy consumption of the whole vehicle based on the characteristics of electric drives. The following provides a detailed description.

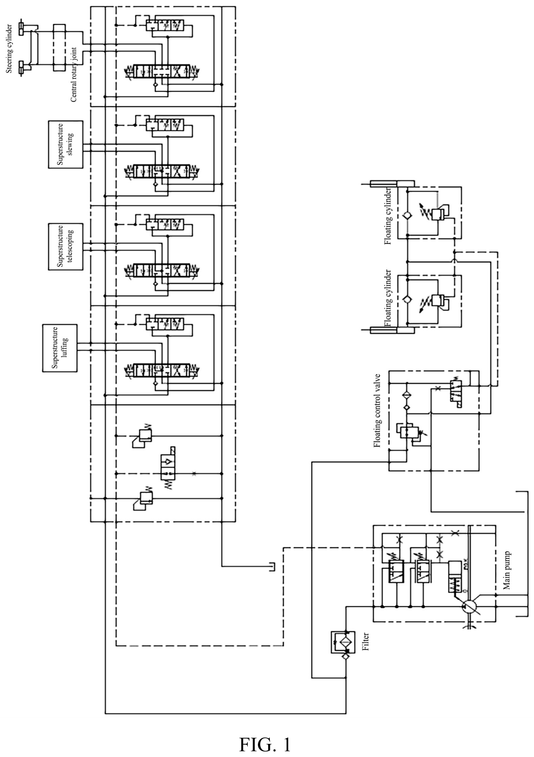

As shown in FIG. 1, in the hydraulic system of the electric-driven aerial work platform in the prior art, the substructure steering and floating actions share the large-displacement main pump of the superstructure with the superstructure luffing, telescoping, and other actions, and the superstructure multi-way valve is used to control the substructure steering and floating. This hydraulic system is not only complex and difficult to arrange the hydraulic lines, but also has high electrical energy consumption, the cause of which is unclear.

Through long-term and continuous observation and testing, the inventors of the present application have concluded that precisely because when performing combined actions including the superstructure luffing and/or telescoping and the substructure steering and/or floating, the hydraulic system pressure is the high pressure required for the superstructure actions, and the high-pressure hydraulic oil needs to be reduced in pressure when supplied to the steering and floating actions. In addition, the oil needs to be passed through the central rotary joint from the superstructure to the substructure, inevitably resulting in a large pressure loss and high energy consumption, making it difficult to meet the energy consumption requirements of electric-driven vehicles.

Therefore, the hydraulic system of the present application adopts the independent distributed arrangement of the superstructure hydraulic system and the substructure hydraulic system, solving the problem in the prior art that the substructure steering cylinder and the floating cylinder require high-pressure pumping oil from the superstructure hydraulic pump to be transported through the central rotary joint, resulting in a large pressure loss. The needs of energy conservation and emission reduction are met.

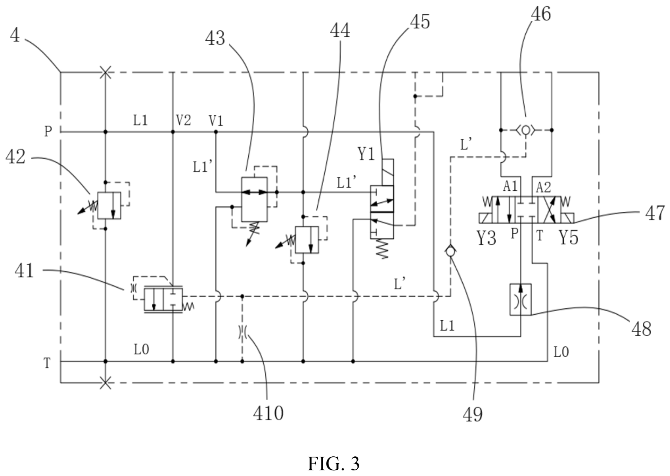

In the embodiment combined with FIG. 2 and FIG. 3, the substructure hydraulic system may include a steering control hydraulic circuit, which includes:
a steering directional control valve 47, used for directional control of the steering cylinder 7 and including a first working port A1 and a second working port A2 respectively connected to the large and small chambers of the steering cylinder 7, in which an inlet port of the steering directional control valve 47 is connected to a main oil inlet circuit L1, and a return port is connected to a main oil return circuit L0;
a shuttle valve 46, in which two comparison ports are respectively connected to the first working port A1 and the second working port A2; and
a compensator 41, connected between the main oil inlet circuit L1 and the main oil return circuit L0, in which a control port is hydraulically connected to an outlet port of the shuttle valve 46 through a pilot control oil circuit L'.

Among them, the compensator 41 ensures that the system flow and pressure are output as required by receiving a relatively high-pressure pilot signal transmitted from the shuttle valve 46. Specifically, when the steering cylinder 7 works under load, the valve port of compensator 41 is substantially closed, blocking pressure relief of the main oil inlet circuit L1. When the steering cylinder 7 is in a non-working state, the valve port of the compensator 41 can be partially opened so that the pressure oil of the main oil inlet circuit L1 can be relieved through the compensator 41, ensuring that the flow and pressure are output as required by the system.

In FIG.3, as an example, the compensator 41 is a hydraulically controlled stop valve with continuously adjustable valve port opening. The control port of the compensator 41 includes a first control end and a second control end at both ends. The first control end is a spring end connected to the pilot control oil circuit L', and the second control end is hydraulically connected to the main oil inlet circuit L1. When the substructure hydraulic pump 2 is not started, the main oil inlet circuit L1 is at low pressure, and the first control end, under the action of the spring, holds the compensator 41 in the right stop position as shown in the figure. When the substructure hydraulic pump 2 is started and the steering cylinder 7 works, pressure relief or oil replenishment is carried out according to load requirements. Of course, it can be understood by those skilled in the art that the compensator 41 may have various other valve body structures and forms, and is not limited to those shown in FIG. 3.

In addition, the steering control hydraulic circuit may further include:
a one-way valve 49, arranged in the pilot control oil circuit L' of the compensator 41;
in which, the one-way valve 49 is configured to allow hydraulic oil to flow from the outlet port of the shuttle valve 46 to the control port of the compensator 41 and is configured to stop flow in the reverse direction.

The arrangement of the one-way valve 49 can provide a certain backpressure and make the system have a certain anti-interference ability.

In addition, the steering control hydraulic circuit may further include:
a throttle valve 410, arranged in a connecting oil circuit between the pilot control oil circuit L' and the main oil return circuit L0.

The arrangement of the throttle valve 410 here is to remove the signal transmitted by the shuttle valve 46 and maintain the stability of the compensator 41.

Further, the steering control hydraulic circuit may also include:
a pressure-compensated flow valve 48, arranged in the main oil inlet circuit L1 adjacent to the inlet port of the steering directional control valve 47.

The pressure-compensated flow valve 48 arranged here can be used to further control the supply of a constant flow to the steering mechanism.

In this embodiment, the substructure hydraulic system may further include a floating control hydraulic circuit, which includes:
a floating control valve 45, used for controlling the floating cylinder assembly 6, in which an inlet port of the floating control valve 45 is connected to the main oil inlet circuit L1 through a bypass oil inlet circuit L1'; and
a pressure reducing valve 43, arranged in the bypass oil inlet circuit L1';
in which, the bypass oil inlet circuit L1' forms a first hydraulic connection point V1 on the main oil inlet circuit L1, and the compensator 41 forms a second hydraulic connection point V2 on the main oil inlet circuit L1, and the first hydraulic connection point V1 is located at the downstream end of the second hydraulic connection point V2.

It can be seen that the floating control hydraulic circuit is arranged in parallel with the steering control hydraulic circuit. The floating control hydraulic circuit introduces pressure oil from the main oil inlet circuit L1 through the bypass oil inlet circuit L1'. After the pressure oil of the main oil inlet circuit L1 is depressurized by the pressure reducing valve 43, most of the oil is supplied to the large and small chambers of the floating cylinder assembly 6, and a small part is supplied to the floating control valve 45 as pilot hydraulic oil for pilot-controlling the balance valve group of the floating cylinder to achieve floating hydraulic locking or cylinder pressure relief of the floating cylinder. The first hydraulic connection point V1 formed on the main oil inlet circuit L1 by the bypass oil inlet circuit L1' is located at the downstream end of the second hydraulic connection point V2 formed on the main oil inlet circuit L1 by the compensator 41, so the oil supply compensation control of the compensator 41 for the steering cylinder 7 is less affected by the oil distribution of the floating cylinder assembly 6.

In addition, the substructure hydraulic system may further include:
a floating relief valve 44, arranged between the bypass oil inlet circuit L1' and the main oil return circuit L0 between the pressure reducing valve 43 and the floating control valve 45; and
a main relief valve 42, arranged between the main oil inlet circuit L1 and the main oil return circuit L0.

Among them, the main relief valve 42 serves as a safety valve for the entire system to ensure that the circuit pressure does not exceed the maximum allowable pressure of the substructure hydraulic pump 2 at any time. The floating relief valve 44 ensures that the pressure of the floating control hydraulic circuit does not exceed a safe range.

The above valves can be arranged separately or in an integrated manner. Therefore, the substructure hydraulic system may further include:
a power unit assembly, including an integrated arrangement of the substructure hydraulic pump 2, a motor, and a hydraulic oil tank 1; and
a control valve group 4, at least including an integrated arrangement of the steering directional control valve 47, the shuttle valve 46, the compensator 41, the floating control valve 45, and the pressure reducing valve 43.

Among them, the substructure hydraulic pump 2 may be integrated with the control valve group 4, or they can be arranged separately. The floating cylinder assembly 6 may include a floating balance valve and a cylinder to realize the floating function of the whole machine. The function of the high-pressure filter 3 in FIG. 2 is to filter the oil output by the substructure hydraulic pump 2; the pressure measuring connector 5 is used to detect the pressure of the system or circuit. The pressure measuring connector 5 may be replaced by a pressure sensor to implement other control logic.

When the operator operates the whole machine to travel, the oil pumped out by the substructure hydraulic pump 2 passes through the high-pressure filter 3 and enters the control valve group 4. The floating of the whole machine is controlled by the floating control valve 45, and the steering of the whole machine is controlled by the steering directional control valve 47. The substructure hydraulic system adopts a distributed arrangement of the substructure hydraulic pump 2 and the control valve group 4 separately, which makes the system isolated from other actions of the whole machine to achieve energy saving and consumption reduction.

It should be noted that the substructure hydraulic pump 2 and the superstructure hydraulic pump in this embodiment are both motor-driven hydraulic pumps. The substructure hydraulic system may further include a travel control hydraulic circuit, including multiple travel motors. The travel control hydraulic circuit can be supplied with oil by the substructure hydraulic pump 2 or an independent pump.

Specifically, as shown in FIG. 2, after the start of the substructure hydraulic pump 2, when it is necessary to control the floating of the whole machine, the electromagnet Y1 can be controlled to be energized, and the floating control valve 45 is in the upper stop position. The pressure oil of the main oil inlet circuit L1 is depressurized by the pressure reducing valve 43, passes through the one-way valve in the balance valve group, is supplied to the floating cylinder assembly 6, and is locked by the balance valve group of the floating cylinder. When it is necessary to release the floating, the electromagnet Y1 can be controlled to be de-energized, the floating control valve 45 is in the down-conduction position, and the pressure oil depressurized by the pressure reducing valve 43 is used as the pilot oil to control the opening of the sequence valve in the single balance valve. The oil in the large chamber of the floating cylinder can return through the sequence valve to release the floating state. When it is necessary to control the steering of the whole machine, according to the steering direction, the electromagnet Y3 or Y5 is controlled to be energized, and the pressure oil in the main oil inlet circuit L1 passes through the steering directional control valve 47 and flows to the steering cylinder 7 to control the steering of the vehicle body.

The present application further discloses a new type of electric-driven aerial work platform, including the hydraulic system of the electric-driven aerial work platform described in the present application. This new type of electric-driven aerial work platform better solves the problem in the prior art that the substructure steering cylinder and the floating cylinder require high-pressure pumping oil from the superstructure hydraulic pump to be transported through the central rotary joint, resulting in a large pressure loss. The needs for energy conservation and emission reduction are better met.

In the description of the present application, it should be understood that the terms "first" and "second" are used merely for illustrative purposes and shall not be construed as indicating or implying relative importance or as implicitly specifying the number of technical features referred to. To this end, the features defined with the terms "first" and "second" may explicitly or implicitly include at least one of the features. In the context of the present application, unless otherwise specifically defined, "multiple" means at least two, for example, two or three.

In the present application, unless otherwise expressly specified and defined, the terms "mount", "be connected to", "be connected with", "fix", and so forth shall be interpreted in a broad sense. For example, the connection can be fixed connection, detachable connection, integrated connection, mechanical connection, electrical connection, connection capable of communicating with each other, direct connection, indirect connection through intermediate media, connection between two components or interaction between two components, unless otherwise specifically defined. For those of ordinary skill in the art, the specific meaning of the preceding terms in the present application can be understood according to the specific situation.

In the description of the specification, descriptions with reference to the terms "an embodiment", "some embodiments", "example", "specific example", or "some examples" mean that specific features, structures, materials, or characteristics described in combination with the embodiment or example are contained in at least an embodiment or example of the present application. In the specification, the schematic expressions of the above terms do not necessarily refer to the same embodiments or examples. Moreover, the specific features, structures, materials or characteristics described may be combined in any one or more embodiments or examples in a suitable manner. Furthermore, the technicians in this field may combine different embodiments or examples described in the specification and features of different embodiments or examples without contradiction.

Although the embodiment of the present application has been shown and described above, it can be understood that the above embodiment is exemplary and cannot be understood as a limitation on the present application. The changes, modifications, replacements, and improvements can be made to the above embodiment within the scope of the present application for ordinary persons skilled in the art.

## Claims

1. A hydraulic system for an electric-driven aerial work platform, comprising:
a superstructure hydraulic system, comprising a luffing cylinder and a telescopic cylinder to drive a boom, and a superstructure hydraulic pump to supply oil to the luffing cylinder and the telescopic cylinder; and
a substructure hydraulic system, comprising a steering cylinder (7) to drive a vehicle body to steer, a floating cylinder assembly (6), and a substructure hydraulic pump (2) to supply oil to the steering cylinder (7) and the floating cylinder assembly (6);
wherein, the superstructure hydraulic system and the substructure hydraulic system are independent of each other, and a rated displacement of the superstructure hydraulic pump is greater than a rated displacement of the substructure hydraulic pump (2).

2. The hydraulic system of the electric-driven aerial work platform according to claim 1, wherein the substructure hydraulic system comprises a steering control hydraulic circuit which comprises:
a steering directional control valve (47) used for directional control of the steering cylinder (7) and comprising a first working port (A1) and a second working port (A2) respectively connected to the large and small chambers of the steering cylinder (7), wherein an inlet port of the steering directional control valve (47) is connected to a main oil inlet circuit (L1), and a return port is connected to a main oil return circuit (L0);
a shuttle valve (46) of which two comparison ports are respectively connected to the first working port (A1) and the second working port (A2); and
a compensator (41) connected between the main oil inlet circuit (L1) and the main oil return circuit (L0), wherein a control port of the compensator (41) is hydraulically connected to an outlet port of the shuttle valve (46) through a pilot control oil circuit (L').

3. The hydraulic system of the electric-driven aerial work platform according to claim 2, wherein the compensator (41) is a hydraulically controlled stop valve with continuously adjustable valve port opening, and the control port of the compensator (41) comprises a first control end and a second control end at both ends, wherein the first control end is a spring end connected to the pilot control oil circuit (L'), and the second control end is hydraulically connected to the main oil inlet circuit (L1).

4. The hydraulic system of the electric-driven aerial work platform according to claim 2, wherein the steering control hydraulic circuit comprises:
a one-way valve (49), arranged in the pilot control oil circuit (L') of the compensator (41);
wherein, the one-way valve (49) is configured to allow oil to flow from the outlet port of the shuttle valve (46) to the control port of the compensator (41) and is configured to stop flow in the reverse direction.

5. The hydraulic system of the electric-driven aerial work platform according to claim 2, wherein the steering control hydraulic circuit comprises:
a throttle valve (410) arranged in a connecting oil circuit between the pilot control oil circuit (L') and the main oil return circuit (L0).

6. The hydraulic system of the electric-driven aerial work platform according to claim 2, wherein the steering control hydraulic circuit comprises:
a pressure-compensated flow valve (48) arranged in the main oil inlet circuit (L1) adjacent to the inlet port of the steering directional control valve (47).

7. The hydraulic system of the electric-driven aerial work platform according to any one of claims 2-6, wherein the substructure hydraulic system comprises a floating control hydraulic circuit which comprises:
a floating control valve (45) used for controlling the floating cylinder assembly (6), wherein an inlet port of the floating control valve (45) is connected to the main oil inlet circuit (L1) through a bypass oil inlet circuit (L1'); and
a pressure reducing valve (43) arranged in the bypass oil inlet circuit (L1');
wherein, the bypass oil inlet circuit (L1') forms a first hydraulic connection point (V1) on the main oil inlet circuit (L1), and the compensator (41) forms a second hydraulic connection point (V2) on the main oil inlet circuit (L1), and the first hydraulic connection point (V1) is located at the downstream of the second hydraulic connection point (V2).

8. The hydraulic system of the electric-driven aerial work platform according to claim 7, wherein the substructure hydraulic system comprises:
a floating relief valve (44) arranged between the bypass oil inlet circuit (L1') and the main oil return circuit (L0) between the pressure reducing valve (43) and the floating control valve (45); and
a main relief valve (42) arranged between the main oil inlet circuit (L1) and the main oil return circuit (L0).

9. The hydraulic system of the electric-driven aerial work platform according to claim 7, wherein the substructure hydraulic system comprises:
a power unit assembly comprising an integrated arrangement of the substructure hydraulic pump (2), a motor, and a hydraulic oil tank (1); and
a control valve group (4), at least comprising an integrated arrangement of the steering directional control valve (47), the shuttle valve (46), the compensator (41), the floating control valve (45), and the pressure reducing valve (43).

10. The hydraulic system of the electric-driven aerial work platform according to claim 1, wherein the substructure hydraulic pump (2) and the superstructure hydraulic pump are both motor-driven hydraulic pumps.

11. An electric-driven aerial work platform, wherein the electric-driven aerial work platform comprises the hydraulic system of the electric-driven aerial work platform according to any one of claims 1-10.
